# EUROPEAN PATENT SPECIFICATION

(11) **EP 3 663 964 B1**
(45) Date of publication and mention of the grant of the patent: **25.02.2026**
(21) Application number: 17920381.5
(22) Date of filing: 07.11.2017
(51) Int. Cl.: G06V 10/143

(54) **FINGER VEIN IMAGE ACQUISITION DEVICE**
VERFAHREN ZUR AUFNAHME VON FINGERVENENBILDERN
DISPOSITIF D'ACQUISITION D'IMAGE DE VEINE DE DOIGT

(30) Priority: 01.08.2017 CN 201710648612
(43) Date of publication of application: 10.06.2020
(73) Proprietor: Nanjing Easthouse Information Technology Co., Ltd., Jiangsu 210032 (CN); Nanjing Easthouse Electrical Co., Ltd., Jiangsu 210032 (CN)
(72) Inventor: MIN, Hao, Nanjing Jiangsu 210032 (CN)
(74) Representative: Wang, Bo
(86) International application number: PCT/CN2017/109780
(87) International publication number: WO 2019/024306

(56) References cited:
- WO-A1-2017/115512
- CN-A- 1 932 845
- CN-A- 103 116 741
- CN-A- 104 221 049
- CN-A- 106 022 210
- CN-A- 106 778 446
- CN-A- 106 960 194
- CN-U- 205 354 052
- US-A1- 2004 179 723
- US-A1- 2007 230 753
- US-A1- 2011 063 077

## Description

### FIELD

The present disclosure generally relates to user authentication, and more particularly to several finger vein sensors that provide better finger vein pattern, and are contamination resistant.

### BACKGROUND

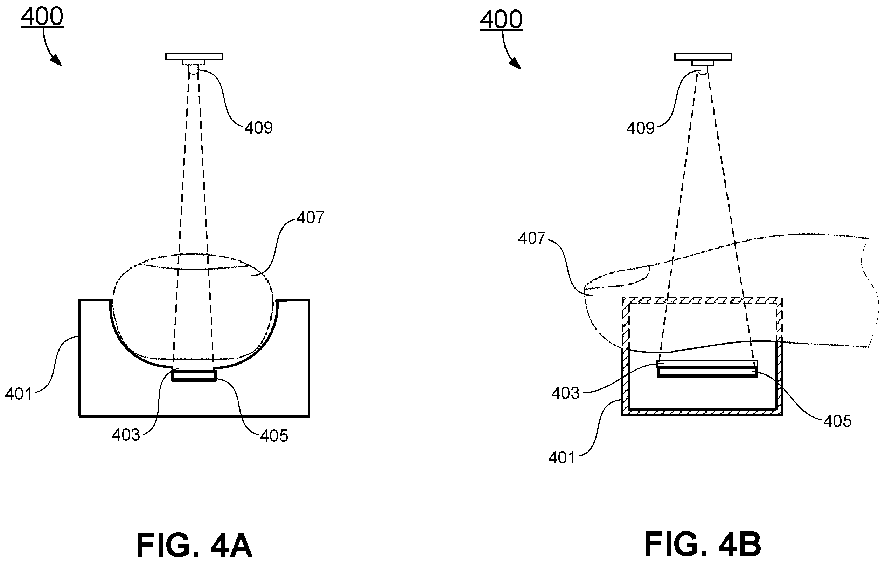

Finger vein sensors have been widely used for user authentication. However, the conventional finger vein sensors have some issues that need to be improved. As shown in related art FIG. 4A and FIG. 4B, the finger vein sensor 400 includes a sensor body 401, a finger vein pattern sensing surface 405, and an infrared light-emitting diode (LED) 409. The infrared light-emitting diode (LED) 409 irradiates infrared light on a finger 407 and generates finger vein pattern on the finger vein pattern sensing surface 405. The finger vein pattern sensing surface 405 captures the finger vein pattern for user authentication. As shown in FIG. 4A and FIG. 4B, the finger vein pattern sensing surface 405 is relatively small compared to the size of the finger 407. Therefore, only a small portion of the finger vein pattern is captured for user authentication. The finger 407 often touches the finger vein pattern sensing surface 405, and any contamination on the surface of the finger 407 may distort the finger vein pattern of the finger 407 captured, which may cause authentication errors. Additionally, the sensor body 401 defines a small space 403 above the finger vein pattern sensing surface 405. If the space 403 has water on it, the finger vein sensor 400 will fail. Therefore, the conventional finger vein sensors are widely used only in indoor applications.

Therefore, heretofore unaddressed needs still exist in the art to address the aforementioned deficiencies and inadequacies.

CN 106022210 A relates to a biometric recognition technology, in particular to an identification method and device for a vein contour three-dimensional point cloud matching. US 2011/063077 A1 relates to a vein authentication apparatus using total internal reflection in which a protective panel for total internal reflection is provided between a light source and an imaging element, thereby realizing a small size and a slim shape.

### SUMMARY

The invention is set out in the appended set of claims.

### BRIEF DESCRIPTION OF THE DRAWINGS

The accompanying drawings illustrate one or more embodiments of the present disclosure, and features and benefits thereof, and together with the written description, serve to explain the principles of the present invention. Wherever possible, the same reference numbers are used throughout the drawings to refer to the same or like elements of an embodiment, and wherein:

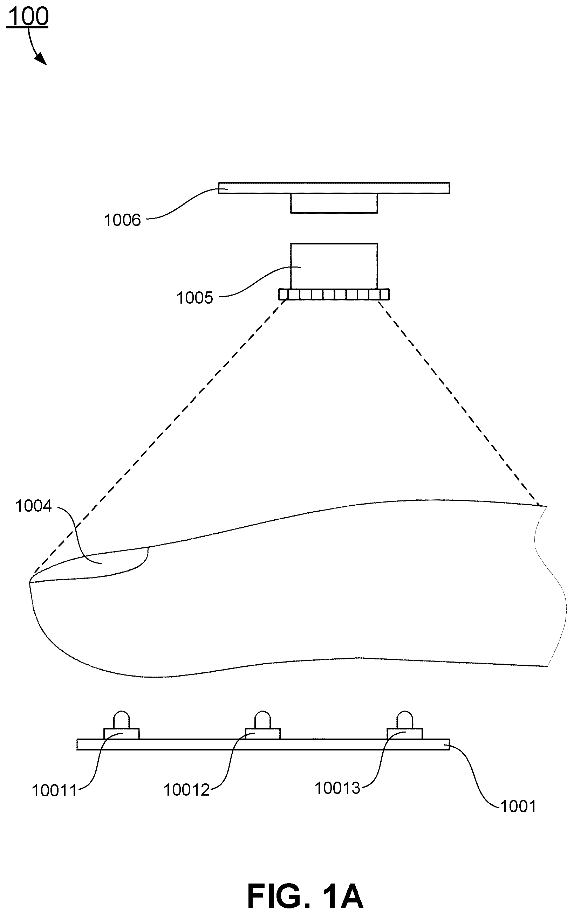

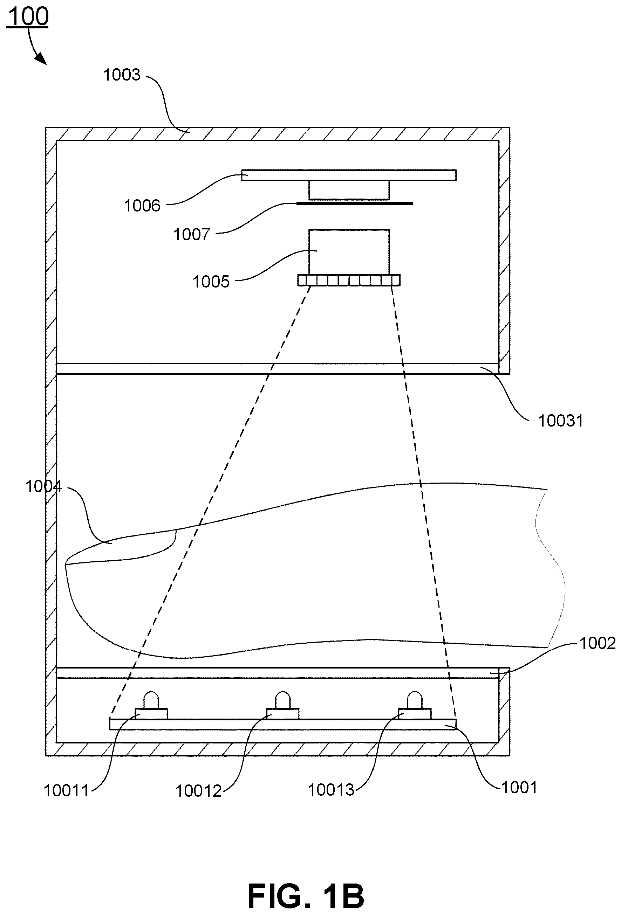

FIG. 1A shows a configuration of a finger vein sensor 100 having an infrared light source at bottom and a finger vein pattern image sensor on top, and FIG. 1B shows a side sectional view of the finger vein sensor 100, which is not encompassed by the wording of the claims but are considered as useful for understanding the invention;

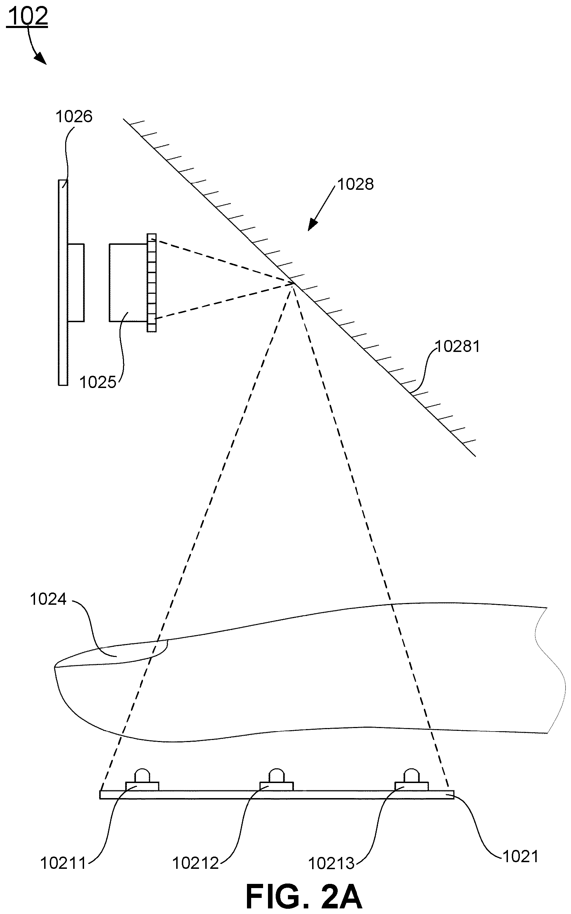

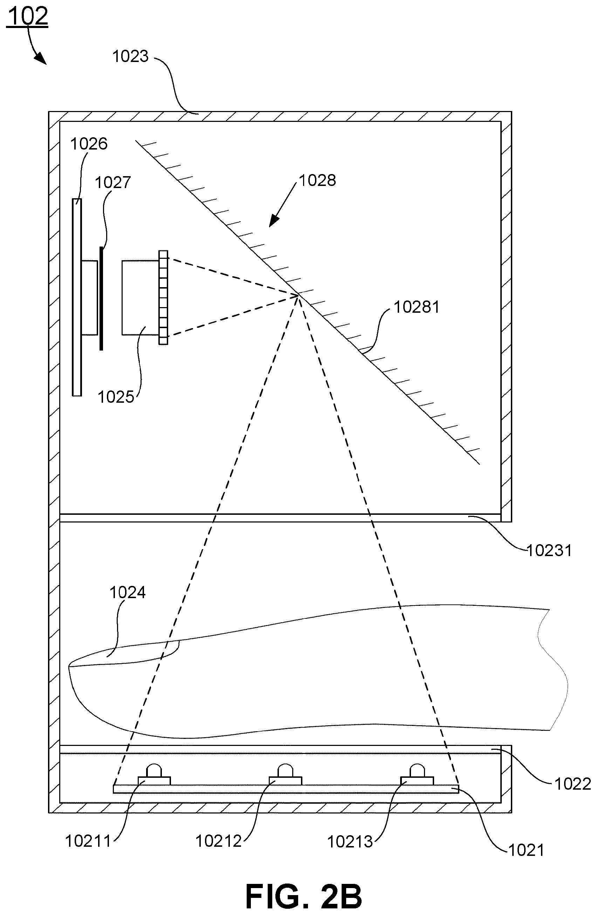

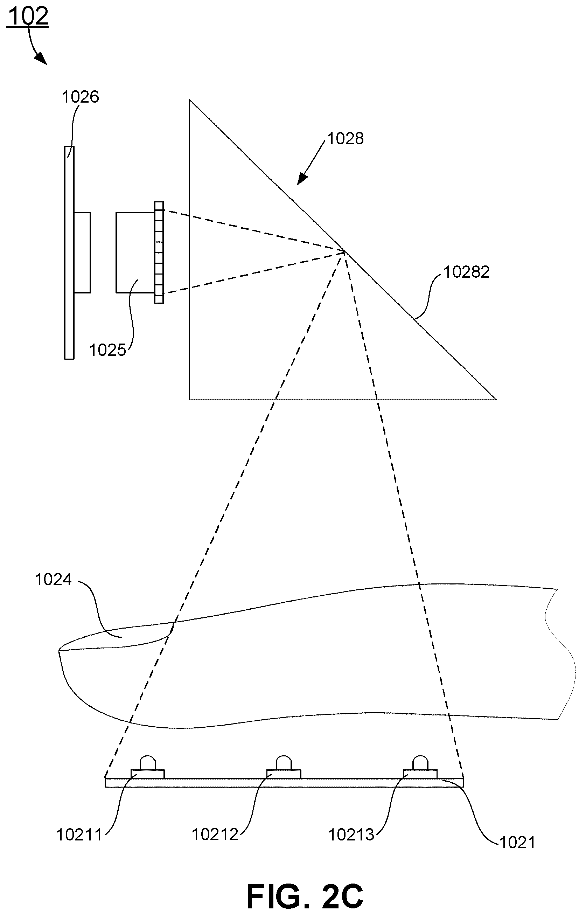

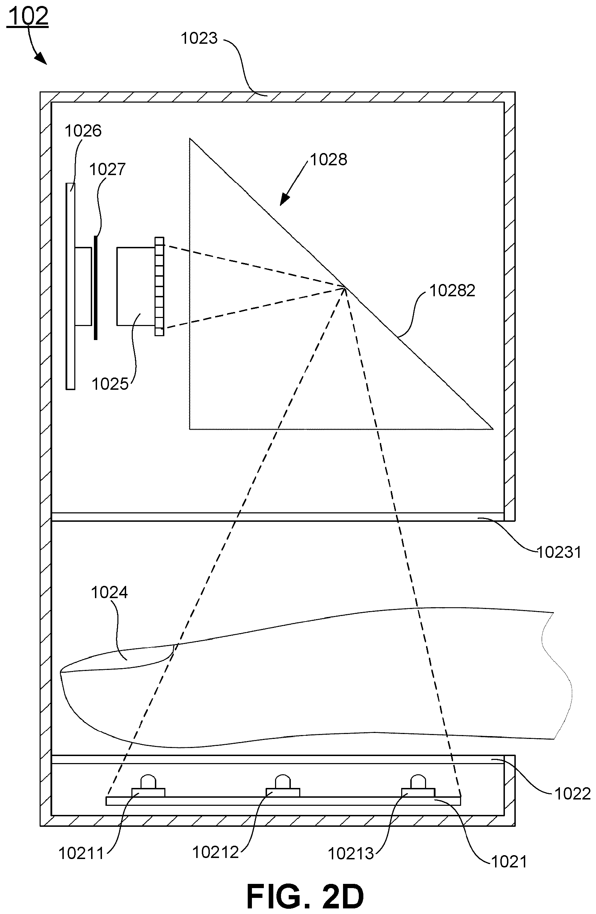

FIG. 2A shows a configuration of a finger vein sensor 102 having an infrared light source at bottom, a finger vein pattern image sensor on top facing a user and a reflecting mirror, FIG. 2B shows a side sectional view of the finger vein sensor 102 according to one embodiment of the present disclosure; and FIG. 2C shows a configuration of a finger vein sensor 102 having an infrared light source at bottom, a finger vein pattern image sensor on top facing a user and a triangular reflecting glass, and FIG. 2D shows a side sectional view of the finger vein sensor 102 according to another embodiment of the present disclosure;

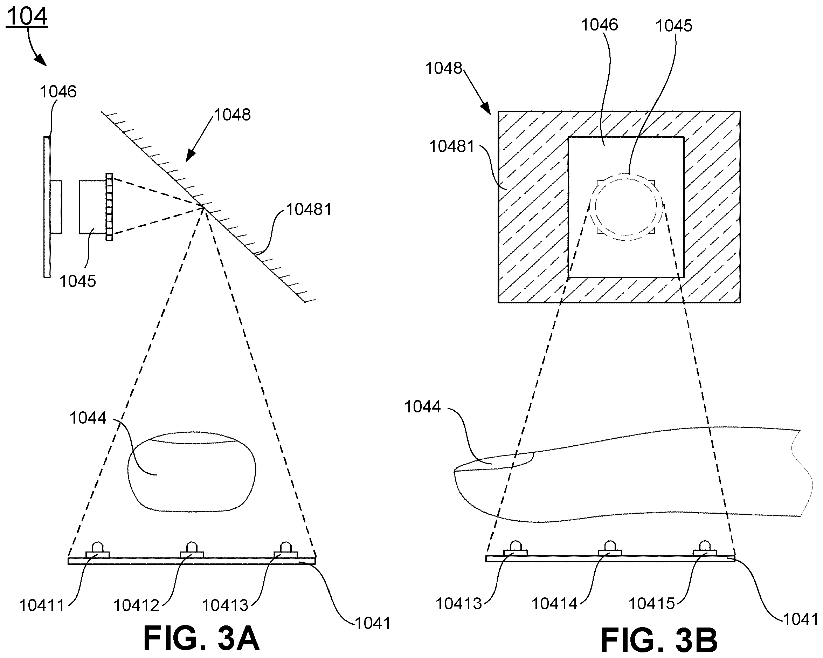

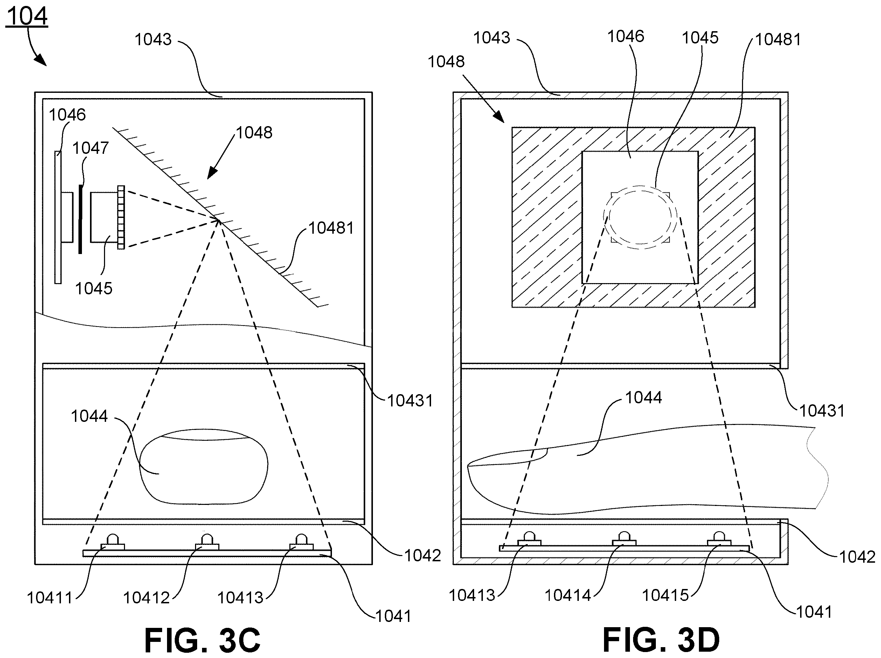

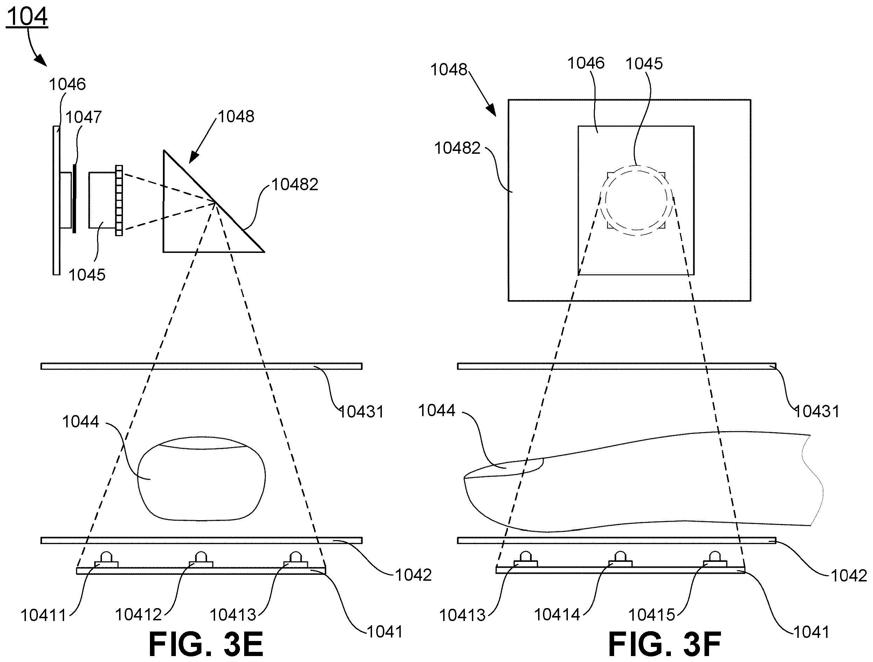

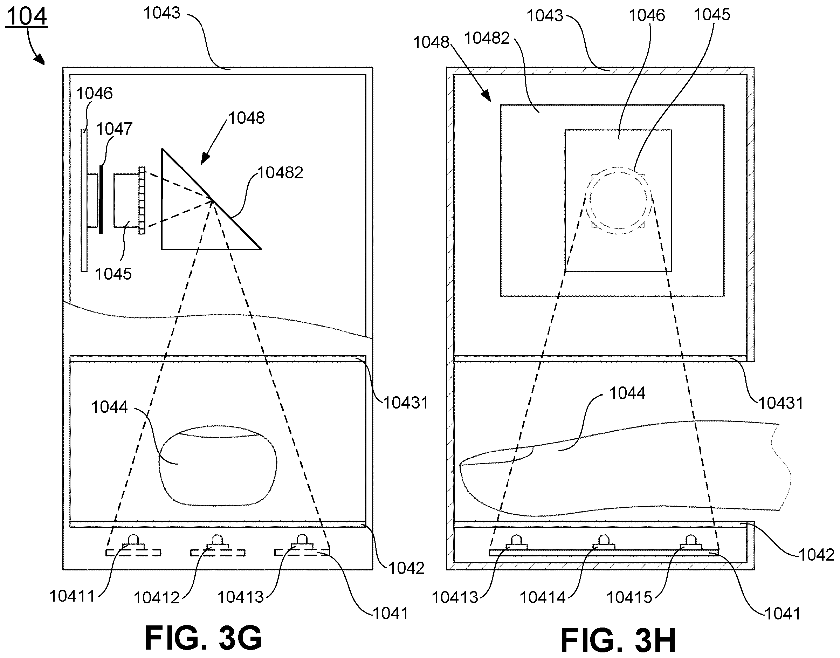

FIG. 3A shows a front view of a finger vein sensor 104 having an infrared light source at bottom, a finger vein pattern image sensor on top left side facing the center of the finger vein sensor and a reflecting mirror, FIG. 3B shows a side view of the finger vein sensor 104, FIG. 3C shows a partially sectional front view of the finger vein sensor 104, and FIG. 3D shows a side sectional view of the finger vein sensor 104 according to one embodiment of the present disclosure; and FIG. 3E shows a front view of a finger vein sensor 104 having an infrared light source at bottom, a finger vein pattern image sensor on top left side facing the center of the finger vein sensor and a triangular reflecting glass, FIG. 3F shows a side view of the finger vein sensor 104, FIG. 3G shows a partially sectional front view of the finger vein sensor 104, and FIG. 3H shows a side sectional view of the finger vein sensor 104 according to another embodiment of the present disclosure; and
FIG. 4A shows a front view of a conventional finger vein sensor 400, and FIG. 4B shows a side sectional view of the conventional finger vein sensor 400.

### DETAILED DESCRIPTION

The present disclosure is more particularly described in the following examples that are intended as illustrative only since numerous modifications and variations therein will be apparent to those skilled in the art. Various embodiments of the disclosure are now described in detail. Referring to the drawings, like numbers, if any, indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise. Moreover, titles or subtitles may be used in the specification for the convenience of a reader, which shall have no influence on the scope of the present disclosure. Additionally, some terms used in this specification are more specifically defined below.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and in no way limits the scope and meaning of the disclosure or of any exemplified term. Likewise, the disclosure is not limited to various embodiments given in this specification.

Unless otherwise defined, all technical and scientific terms used herein have the same meaning as commonly understood by one of ordinary skill in the art to which this
disclosure pertains. **In** the case of conflict, the present document, including definitions will control.

As used herein, "around", "about" or "approximately" shall generally mean within 20 percent, preferably within 10 percent, and more preferably within 5 percent of a
given value or range. Numerical quantities given herein are approximate, meaning that the term "around", "about" or "approximately" can be inferred if not expressly stated.

As used herein, "plurality" means two or more.

As used herein, the terms "comprising," "including," "carrying," "having," "containing," "involving," and the like are to be understood to be open-ended, i.e., to mean including but not limited to.

As used herein, the phrase at least one of A, B, and C should be construed to mean a logical (A or B or C), using a non-exclusive logical OR. It should be understood that one or more steps within a method may be executed in different order (or conconventionally) without altering the principles of the present disclosure.

The present disclosure will now be described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

As shown in related art FIG. 4A and FIG. 4B, the conventional finger vein sensor 400 has, among other things, following disadvantages. The finger vein pattern sensing surface 405 is relatively small compared to the size of the finger 407. Therefore, only a small portion of the finger vein pattern is captured for user authentication. The finger 407 often touches the finger vein pattern sensing surface 405, and any contamination on the surface of the finger 407 may distort the finger vein pattern of the finger 407 captured, which may cause authentication errors. Additionally, the sensor body 401 defines a small space 403 above the finger vein pattern sensing surface 405. If the space 403 has water on it, the finger vein sensor 400 will fail. The present disclosure discloses several new improvements that will increase the size of the finger vein pattern images, that will eliminate authentication error caused by sensor surface contamination, and that will prevent authentication failures caused by moisture or water on the sensor surface.

Referring now to FIGS. 1A and 1B, in one aspect, the present disclosure relates to a finger vein sensor 100. Finger vein sensor 100 is not encompassed by the wording of the claims but is considered as useful for understanding the invention. In certain embodiments, the finger vein sensor 100 includes: an image sensor 1006, and an infrared light source 1001.

In certain embodiments, the infrared light source 1001 may include a predetermined number of infrared light-emitting diodes (LEDs), a predetermined number of infrared light bulbs, and/or any other infrared light sources. As shown in the side view of the finger vein sensor 100 in FIGS. 1A and 1B, the infrared light source 1001 includes a first infrared LED 10011, a second infrared LED 10012, and a third infrared LED 10013. The infrared LED or the infrared light bulbs may be arranged in one or more rows and one or more columns and positioned at the bottom of the finger vein sensor 100. These three LEDs as shown in FIGS. 1A and 1B form one column of the infrared light source 1001. The infrared light source 1001 may include more than one columns of infrared LEDs (not shown in FIGS. 1A and 1B). Such infrared light source 1001 provides high intensity and evenly distributed infrared light to penetrate a finger 1004 of a target human and generates large size finger vein pattern images with more clarity.

In certain embodiments, the image sensor 1006 captures at least one infrared image of finger vein pattern of the finger 1004. The image sensor 1006 faces down in a vertical direction and is positioned at the top of the finger vein sensor 100. The finger 1004 is positioned between the infrared light source 1001 and the image sensor 1006. The infrared light from the infrared light source 1001 irradiates the finger 1004 vertically from the bottom to generate the infrared image of finger vein pattern of the finger 1004 on the image sensor 1006, and the image sensor 1006 then captures the infrared image of finger vein pattern of the finger 1004.

In certain embodiments, the finger vein sensor 100 may include a transparent finger resting surface 1002 for resting the finger 1004. This transparent finger resting surface 1002 allows the user to rest the finger 1004 on it and generates a steady finger vein pattern image at a fixed location. It prevents inconsistency when the finger 1004 moves up and down.

In certain embodiments, the finger vein sensor 100 may also include a lens 1005. The lens 1005 is positioned between the finger 1004 and the image sensor 1006. The lens 1005 is adjusted to focus on the finger vein pattern generated above the transparent finger resting surface 1002. The combination of the lens 1005 and the transparent finger resting surface 1002 allows the image sensor 1006 to capture consistent finger vein pattern images and improve quality of the infrared image of finger vein pattern of the finger 1004.

In certain embodiments, the finger vein sensor 100 may also include an infrared filter 1007. The infrared filter 1007 may be placed between the lens 1005 and the image sensor 1006. The infrared filter 1007 allows infrared lights to pass and eliminates light interference from any lights other than infrared light. Therefore, the application of the infrared filter 1007 also improves the quality of the infrared image of finger vein pattern of the finger 1004.

In certain embodiments, the finger vein sensor 100 may also include a finger vein sensor enclosure 1003 as shown in FIG. 1B. The finger vein sensor enclosure 1003 includes a lower compartment, and an upper compartment. The infrared light source 1001 is positioned in the lower compartment and provides infrared light through the transparent finger resting surface 1002 vertically from the lower compartment. The lens 1005, the infrared filter 1007 and the image sensor 1006 are positioned in the upper compartment. A lower surface 10031 of the upper compartment is a transparent surface to allow the image sensor 1006 to capture the finger vein pattern image of the finger 1004 formed above the transparent finger resting surface 1002.

The configuration of the finger vein sensor 100 creates larger size finger vein pattern images than the conventional finger vein sensors. Conventional finger vein sensor allows user to touch the image forming surface of the finger vein sensor, any contamination on the image forming surface of the finger vein sensor will be captured by the conventional vein sensor and it will cause authentication errors. The finger vein sensor 100 prevents such errors from happening. Any contaminations such as dirt on the surface of the finger 1004, the dirt accumulated on the transparent finger resting surface 1002, or finger prints left on the transparent finger resting surface 1002 will not be captured by the image sensor 1006. The water stains or water accumulated on the transparent finger resting surface 1002 will not cause any authentication errors because the water will be transparent and will not distort the finger vein pattern of the finger 1004.

As shown in FIGS. 1A and 1B, in order to create large finger vein pattern image, the image sensor 1006 should have sufficient distance from the finger 1004 resting on the transparent finger resting surface 1002 because of the straight infrared light path from the bottom to the top of the finger vein sensor enclosure 1003. This may cause the finger vein sensor enclosure 1003 to become tall. In order to shorten the height of the finger vein sensor enclosure 1003, a few more exemplary embodiments of finger vein sensors are described as following. In certain embodiments, the straight infrared light path from the bottom to the top of the finger vein sensor enclosure 1003 may be reflected by an optical reflector to become a horizontal infrared light path.

Referring now to FIGS. 2A through 2D, in another aspect, the present disclosure relates to a finger vein sensor 102. In certain embodiments, the finger vein sensor 102 includes: an image sensor 1026, an infrared light source 1021, and an optical reflector 1028.

In certain embodiments, the infrared light source 1021 may include a predetermined number of infrared light-emitting diodes (LEDs), a predetermined number of infrared light bulbs, and/or any other infrared light sources. As shown in the side view of the finger vein sensor 102, the infrared light source 1021 includes a first infrared LED 10211, a second infrared LED 10212, and a third infrared LED 10213. The infrared LED or the infrared light bulbs may be arranged in one or more rows and one or more columns and positioned at the bottom of the finger vein sensor 102. These three LEDs as shown in FIGS. 1A and 1B form one column of the infrared light source 1021. The infrared light source 1021 may include more than one columns of infrared LEDs (not shown in FIGS. 2A through 2D). Such infrared light source 1021 provides high intensity and evenly distributed infrared light to penetrate a finger 1024 of a target human and generates large size finger vein pattern images with more clarity.

In certain embodiments, the image sensor 1026 captures at least one infrared image of finger vein pattern of the finger 1024. The image sensor 1026 faces the target human in a direction from the rear side to the front side of the finger vein sensor and is positioned at the top of the finger vein sensor 102. The finger 1024 is positioned between the infrared light source 1021 and the image sensor 1026. The infrared light from the infrared light source 1021 irradiates the finger 1024 vertically from the bottom to generate the infrared image of finger vein pattern of the finger 1024. The optical reflector 1028 includes a reflecting mirror 10281 as shown in FIGS. 2A and 2B, a triangular reflecting glass 10282 as shown in FIGS. 2C and 2D, or any other optical reflecting devices (not shown in FIGS. 2A through 2D). The optical reflector 1028 is positioned between the image sensor 1026 and the infrared light source 1021 for reflecting the vertically oriented infrared image of finger vein pattern of the finger 1024 to the horizontally oriented image sensor 1026.

The finger 1024 is positioned between the infrared light source 1021 and the image sensor 1026, the infrared light from the infrared light source 1021 irradiates the finger 1024 vertically from the bottom to generate the infrared image of finger vein pattern of the finger 1024 in a vertical direction, and the infrared image of finger vein pattern of the finger 1024 is reflected by the optical reflector 1028 and captured by the horizontally oriented image sensor 1026.

In certain embodiments, the finger vein sensor 102 may include a transparent finger resting surface 1022 for resting the finger 1024. This transparent finger resting surface 1022 allows the user to rest the finger 1024 on it and generates a steady finger vein pattern image at a fixed location. It prevents inconsistency when the finger 1024 moves up and down.

In certain embodiments, the finger vein sensor 102 may also include a lens 1025. The lens 1025 is positioned between the finger 1024 and the image sensor 1026. The lens 1025 is adjusted to focus on the finger vein pattern generated above the transparent finger resting surface 1022. The combination of the lens 1025 and the transparent finger resting surface 1022 allows the image sensor 1026 to capture consistent finger vein pattern images and improve quality of the infrared image of finger vein pattern of the finger 1024.

In certain embodiments, the finger vein sensor 102 may also include an infrared filter 1027. The infrared filter 1027 may be placed between the lens 1025 and the image sensor 1026. The infrared filter 1027 allows infrared lights to pass and eliminates light interference from any lights other than infrared light. Therefore, the application of the infrared filter 1027 also improves the quality of the infrared image of finger vein pattern of the finger 1024.

In certain embodiments, the finger vein sensor 102 may also include a finger vein sensor enclosure 1023 as shown in FIGS. 2B and 2D. The finger vein sensor enclosure 1023 includes a lower compartment, and an upper compartment. The infrared light source 1021 is positioned in the lower compartment and provides infrared light through the transparent finger resting surface 1022 vertically from the lower compartment. The lens 1025, the infrared filter 1027 and the image sensor 1026 are positioned horizontally in the upper compartment. A lower surface 10231 of the upper compartment is a transparent surface to allow the image sensor 1026 to capture the finger vein pattern image of the finger 1024 formed above the transparent finger resting surface 1022. The vertical finger vein pattern image of the finger 1024 is reflected by the optical reflector 1028 and turned to a horizontal finger vein pattern image of the finger 1024 to be captured by the horizontally oriented image sensor 1026.

In additional to have the horizontally oriented image sensor 1026 facing the target human, the vertically generated finger vein pattern of the finger 1024 is reflected by the optical reflector 1028 and captured by the horizontally oriented image sensor 1026 positioned on either side of the finger vein sensor 102. Referring now to FIGS. 3A through 3H, in yet another aspect, the present disclosure relates to a finger vein sensor 104. In certain embodiments, the finger vein sensor 104 includes: an image sensor 1046, an infrared light source 1041, and an optical reflector 1048. The image sensor 1046 captures at least one infrared image of finger vein pattern of a finger 1044 of a target human. In one embodiment, the image sensor 1046 is positioned on the top right side of the finger vein sensor 104 facing the center of the finger vein sensor 104 in a direction from the right side to the left side. In another embodiment, the image sensor 1046 is positioned on the top left side of the finger vein sensor 104 facing the center of the finger vein sensor 104 in a direction from the left side to the right side.

In certain embodiments, the infrared light source 1041 may include a predetermined number of infrared light-emitting diodes (LEDs), a predetermined number of infrared light bulbs, and/or any other infrared light sources. As shown in the front view of the finger vein sensor 104, the infrared light source 1041 includes a first infrared LED 10411, a second infrared LED 10412, and a third infrared LED 10413. As shown in the side view of the finger vein sensor 104, the infrared light source 1041 includes the third infrared LED 10413, a fourth infrared LED 10414, and a fifth infrared LED 10415. In the exemplary embodiment shown in FIGS. 3A and 3B, the infrared LED or the infrared light bulbs may be arranged in three rows and three columns and positioned at the bottom of the finger vein sensor 104. Such infrared light source 1041 provides high intensity and evenly distributed infrared light to penetrate the finger 1044 of the target human and generates large size finger vein pattern images with more clarity.

In certain embodiments, the optical reflector 1048 includes a reflecting mirror 10481, as shown in FIGS. 3A through 3D, a triangular reflecting glass 10482, as shown in FIGS. 3E through 3H, or any other optical reflecting devices (not shown in FIGS. 3A through 3H). The optical reflector 1048 is positioned between the image sensor 1046 and the infrared light source 1041 for reflecting the vertically oriented infrared image of finger vein pattern of the finger 1044 to the horizontally oriented image sensor 1046.

The finger 1044 is positioned between the infrared light source 1041 and the image sensor 1046, the infrared light from the infrared light source 1041 irradiates the finger 1044 vertically from the bottom to generate the infrared image of finger vein pattern of the finger 1044 in a vertical direction, and the vertically oriented infrared image of finger vein pattern of the finger 1044 is reflected by the optical reflector 1048 and captured by the horizontally oriented image sensor 1046.

In certain embodiments, the finger vein sensor 104 may include a transparent finger resting surface 1042 for resting the finger 1044. This transparent finger resting surface 1042 allows the user to rest the finger 1044 on it and generates a steady finger vein pattern image at a fixed location. It prevents inconsistency when the finger 1044 moves up and down.

In certain embodiments, the finger vein sensor 104 may also include a lens 1045. The lens 1045 is positioned between the finger 1044 and the image sensor 1046. The lens 1045 is adjusted to focus on the finger vein pattern generated above the transparent finger resting surface 1042. The combination of the lens 1045 and the transparent finger resting surface 1042 allows the image sensor 1046 to capture consistent finger vein pattern images and improve quality of the infrared image of finger vein pattern of the finger 1044.

In certain embodiments, the finger vein sensor 104 may also include an infrared filter 1047. The infrared filter 1047 may be placed between the lens 1045 and the image sensor 1046. The infrared filter 1047 allows infrared lights to pass and eliminates light interference from any lights other than infrared light. Therefore, the application of the infrared filter 1047 also improves the quality of the infrared image of finger vein pattern of the finger 1044.

In certain embodiments, the finger vein sensor 104 may also include a finger vein sensor enclosure 1043 as shown in FIGS. 3C, 3D, 3G, and 3H. The finger vein sensor enclosure 1043 includes a lower compartment, and an upper compartment. The infrared light source 1041 is positioned in the lower compartment and provides infrared light through the transparent finger resting surface 1042 vertically from the lower compartment. The lens 1045, the infrared filter 1047 and the image sensor 1046 are positioned horizontally in the upper compartment. A lower surface 10431 of the upper compartment is a transparent surface to allow the image sensor 1046 to capture the finger vein pattern image of the finger 1044 formed above the transparent finger resting surface 1042. The vertical finger vein pattern image of the finger 1044 is reflected by the optical reflector 1048 and turned to a horizontal finger vein pattern image of the finger 1044 to be captured by the horizontally oriented image sensor 1046.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated.

## Claims

1. A finger vein sensor [102] comprising:
an image sensor [1026] for capturing at least one infrared image of finger vein pattern of a finger of a target human, wherein the image sensor faces the target human in a direction from the rear side to the front side of the finger vein sensor and is positioned at the top of the finger vein sensor, or the image sensor is positioned on the top right side of the finger vein sensor facing the center of the finger vein sensor in a direction from the right side to the left side, or the image sensor is positioned on the top left side of the finger vein sensor facing the center of the finger vein sensor in a direction from the left side to the right side;
an infrared light source [1021] positioned at the bottom of the finger vein sensor; and
an optical reflector [1028] positioned between the image sensor [1026] and the infrared light source [1021] for reflecting the vertically oriented infrared image of finger vein pattern of the finger to the horizontally oriented image sensor [1026],
wherein the finger is positioned between the infrared light source [1021] and the image sensor [1026], the infrared light from the infrared light source irradiates the finger vertically from the bottom to generate the infrared image of finger vein pattern of the finger in a vertical direction, and the infrared image of finger vein pattern of the finger is reflected by the optical reflector and captured by the horizontally oriented image sensor [1026] .

2. The finger vein sensor [102] of claim 1, wherein the infrared light source [1021] comprises a plurality of infrared light-emitting diodes (LED), a plurality of infrared light bulbs, and/or any other infrared light sources, wherein the plurality of infrared LED and the plurality of infrared light bulbs are arranged in one or more rows and one or more columns.

3. The finger vein sensor [102] of claim 1, wherein the optical reflector [1028] comprises a reflecting mirror, a triangular reflecting glass, or any other optical reflecting devices.

4. The finger vein sensor **[102]** of claim 1, wherein further comprising:
a lens [1025] positioned between the finger and the image sensor [1026], and an infrared filter [1027] positioned between the lens [1025] and the image sensor [1026] for improving quality of the infrared image of finger vein pattern of the finger;
a transparent finger resting surface **[1002]** such that the finger is rested on the transparent finger resting surface; and
a finger vein sensor enclosure having a lower compartment for positioning the infrared light source and an upper compartment for positioning the image sensor and the lens.

5. The finger vein sensor of claim 4, wherein an upper surface of the lower compartment forms the transparent finger resting surface, and a lower surface of the upper compartment [10231] comprises a transparent surface.

## Patentansprüche

1. Fingeradernsensor [102], umfassend:
einen Bildsensor [1026] zum Aufnehmen mindestens eines Infrarotbildes von Fingeradernmuster eines Fingers einer Zielperson, wobei der Bildsensor auf die Zielperson in einer Richtung von der Rückseite zur Vorderseite des Fingeradernsensors gerichtet ist und oben am Fingeradernsensor positioniert ist, oder der Bildsensor auf der oberen rechten Seite am Fingeradernsensor positioniert ist, der auf die Mitte des Fingeradernsensors in einer Richtung von der rechten Seite nach der linken Seite gerichtet ist, oder der Bildsensor auf der oberen linken Seite am Fingeradernsensor positioniert ist, der auf die Mitte des Fingeradernsensors in einer Richtung von der linken Seite nach der rechten Seite gerichtet ist;
eine Infrarotlichtquelle [1021], die am unteren Ende des Fingeradernsensors positioniert ist und
einen optischer Reflektor [1028], der zwischen dem Bildsensor [1026] und der Infrarotlichtquelle [1021] zum Reflektieren des vertikal ausgerichteten Infrarotbildes von Fingeradernmuster des Fingers auf den horizontal ausgerichteten Bildsensor [1026] positioniert ist,
wobei der Finger zwischen der Infrarotlichtquelle [1021] und dem Bildsensor [1026] positioniert ist, das Infrarotlicht von der Infrarotlichtquelle den Finger vertikal von dem unteren Ende bestrahlt, um das Infrarotbild von Fingeradernmuster des Fingers in einer vertikalen Richtung zu erzeugen und das Infrarotbild von Fingeradernmuster des Fingers vom optischen Reflektor reflektiert und vom horizontal ausgerichteten Bildsensor [1026] aufgenommen wird.

2. Fingeradernsensor [102] nach Anspruch 1, wobei die Infrarotlichtquelle [1021] eine Vielzahl von Infrarot-Leuchtdioden (LEDs), eine Vielzahl von Infrarot-Glühbirnen, und/oder andere Infrarotlichtquellen umfasst, wobei die Vielzahl von Infrarot-LEDs und die Vielzahl von Infrarot-Glühbirnen in einer oder mehreren Reihen und einer oder mehreren Spalten angeordnet sind.

3. Fingeradernsensor [102] nach Anspruch 1, wobei der optische Reflektor [1028] einen reflektierenden Spiegel, ein dreieckiges reflektierendes Glas oder andere optische Reflexionsvorrichtungen umfasst.

4. Fingeradernsensor [102] nach Anspruch 1, wobei weiter umfassend:
eine Linse [1025], positioniert zwischen dem Finger und dem Bildsensor [1026], und ein Infrarotfilter [1027], positioniert zwischen der Linse [1025] und dem Bildsensor [1026] zur Verbesserung der Qualität des Infrarotbildes von Fingeradernmuster des Fingers;
eine transparente Fingerauflagefläche [1002], sodass der Finger auf der transparenten Fingerauflagefläche aufliegt; und
ein Fingeradernsensorgehäuse, das ein unteres Fach zur Positionierung der Infrarotlichtquelle und ein oberes Fach zur Positionierung des Bildsensors und der Linse aufweist.

5. Fingeradernsensor nach Anspruch 4, wobei eine obere Fläche des unteren Fachs die transparente Fingerauflagefläche bildet und eine untere Fläche des oberen Fachs [10231] eine transparente Fläche umfasst.

## Revendications

1. Capteur de veine du doigt [102] comprenant :
un capteur d'image [1026] pour capturer au moins une image infrarouge du réseau veineux d'un doigt d'une personne cible, dans lequel le capteur d'image est orienté vers la personne cible dans une direction allant de l'arrière vers l'avant du capteur veineux et est positionné en haut du capteur veineux, ou le capteur d'image est positionné en haut à droite du capteur veineux, face au centre du capteur veineux dans une direction allant de la droite vers la gauche, ou le capteur d'image est positionné en haut à gauche du capteur veineux, face au centre du capteur veineux dans une direction allant de la gauche vers la droite ;
une source de lumière infrarouge [1021] positionnée à la base du capteur veineux du doigt et
un réflecteur optique [1028] positionné entre le capteur d'image [1026] et la source de lumière infrarouge [1021] pour réfléchir l'image infrarouge orientée verticalement du réseau veineux du doigt sur le capteur d'image orienté horizontalement [1026],
dans lequel le doigt est positionné entre la source de lumière infrarouge [1021] et le capteur d'image [1026], la lumière infrarouge émise par la source irradie le doigt verticalement par le bas afin de générer une image infrarouge du réseau veineux du doigt dans une direction verticale, et l'image infrarouge du réseau veineux du doigt est ensuite réfléchie par un réflecteur optique et capturée par un capteur d'image orienté horizontalement. [1026].

2. Capteur de veine du doigt [102] selon la revendication 1, dans lequel la source de lumière infrarouge [1021] comprend une pluralité de diodes électroluminescentes infrarouges (LED), une pluralité d'ampoules infrarouges, et/ou de quelconques autres sources de lumière infrarouge, dans lequel la pluralité de LED infrarouges et la pluralité d'ampoules infrarouges sont agencées sur une ou plusieurs rangées et une ou plusieurs colonnes.

3. Capteur de veine du doigt [102] selon la revendication 1, dans lequel le réflecteur optique [1028] comprend un miroir réfléchissant, un verre réfléchissant triangulaire ou quelconques autres dispositifs de réflexion optique.

4. Capteur de veine du doigt [102) selon la revendication 1, comprenant en outre :
une lentille [1025] positionnée entre le doigt et le capteur d'image [1026], et un filtre infrarouge [1027] positionné entre la lentille [1025] et le capteur d'image [1026] pour améliorer la qualité de l'image infrarouge du réseau veineux du doigt ;
une surface transparente pour reposer le doigt [1002] de sorte que le doigt repose sur la surface transparente pour reposer le doigt ; et
un boîtier de capteur de la veine du doigt présentant un compartiment inférieur pour positionner la source de lumière infrarouge et un compartiment supérieur pour positionner le capteur d'image et la lentille.

5. Capteur de veine du doigt selon la revendication 4, dans lequel une surface supérieure du compartiment inférieur forme la surface d'appui transparente pour reposer le doigt, et une surface inférieure du compartiment supérieur [10231] comprend une surface transparente.
